# EUROPEAN PATENT SPECIFICATION

(11) **EP 0 858 707 B1**
(45) Date of publication and mention of the grant of the patent: **12.02.2003**
(21) Application number: 96935164.2
(22) Date of filing: 04.11.1996
(51) Int. Cl.: H04N 1/411, H04N 1/00

(54) **COMMUNICATION OF IMAGES VIA A RADIO TRANSMISSION CHANNEL**
ÜBERTRAGUNG VON BILDERN ÜBER EINEN RUNDFUNKKANAL
TRANSMISSIONS D'IMAGES PAR MOYEN D'UN CANAL RADIO

(30) Priority: 02.11.1995 GB 9522487
(43) Date of publication of application: 19.08.1998
(60) Divisional application: 01204111.7
(73) Proprietor: Inmarsat Ltd., London EC1Y 1AX (GB)
(72) Inventor: TRACHTMAN, Eyal, London N3 3AN (GB)
(74) Representative: Cross, James Peter Archibald
(86) International application number: GB9602695
(87) International publication number: WO97016920

(56) References cited:
- EP-A- 0 483 969
- WO-A-95/27363
- GB-A- 2 256 558
- US-A- 5 253 936
- US-A- 5 361 138
- IBM TECHNICAL DISCLOSURE BULLETIN, vol. 37, no. 5, May 1994, NEW YORK US, pages 81-82, XP000453088 "Text/Image Separation by Fax with OCR"
- IBM TECHNICAL DISCLOSURE BULLETIN, vol. 25, no. 11b, April 1983, NEW YORK US, pages 6249-6250, XP002025426 R. D. PARROTT: "Text compression using spelling dictionary"
- IBM JOURNAL OF RESEARCH AND DEVELOPMENT, vol. 26, no. 6, November 1982, NEW YORK US, pages 647-656, XP002025427 WONG ET AL: "Document Analysis System"
- IEEE TRANSACTIONS ON VEHICULAR TECHNOLOGY, vol. 43, no. 3, August 1994, NEW YORK US, pages 617-625, XP000466795 DIMOLITSAS ET AL: "Facsimile Transmission Over Digital Satellite Land-Mobile Channels"
- IBM TECHNICAL DISCLOSURE BULLETIN, vol. 32, no. 12, May 1990, NEW YORK US, page 34 XP000105064 "Storage of the capabilities of frequently called facsimile machine"

## Description

The present invention relates to apparatus and methods for image communications, particularly but not exclusively for facsimile images.

Facsimile image communication has developed to a high level of reliability. Facsimile image communications are highly standardised. The signalling stage of communication is specified in, amongst other things, Recommendation T30 (CCITT recommendation T30 "Procedure for document transmission in the general Switched Telephone Network". Volume VII, fascicle VII.3, Melbourne 1988, pages 77-167), and the image encoding is dealt within Recommendation T4 (CCITT recommendation T4 "Standardisation of group 3 facsimile apparatus for document transmission", Red Book, Volume VII, fascicle VII.3, Malaga-Torremolinos 1984, pages 16-31).

These standards were originally developed for operation between two facsimile machines over a circuit connection through the terrestrial wired public switch telephone network. Considerable difficulties arise when the same standards are employed over satellite communication links, because the relatively long transmission time can prevent effective functioning of the T30 signalling protocols.

These difficulties have been alleviated by the provision of facsimile interface units, as described in GB-A-2286739 (for example). A known facsimile interface unit has a port for connection to a facsimile unit (if necessary via a PSTN or other terrestrial network), and a port for connection to a satellite ground station. Each facsimile interface unit (FIU) emulates a facsimile machine, so that the exchange of protocol signals takes place locally between each facsimile unit and its facsimile interface unit rather than being carried over the satellite transmission link.

Facsimile interface units also find application in other radio transmission systems where delays may occur; for example, in terrestrial cellular radio systems such as GSM systems.

It has been proposed to provide compression of the facsimile image at the FIU prior to transmission over the satellite channel. In "Compression of facsimile graphics for transmission over digital mobile satellite circuits", Dimolitsas and Corcoran, Milcom '91, pages 30.1.1-30.1.4 (0644-0647), 1991 IEEE, a compression scheme based on selective removal of pixels to increase run lengths is proposed.

However, some satellite links (for example the relatively low data rate Inmarsat-C link) cannot be used with this type of compression because the data rate after compression is still too high.

Many proposals for compressing image signals in general are known. For example, US-A-4410916 proposes a code book compression system in which, once a symbol (for example a printed character) is encountered on a document, an entry in a code book is created and subsequent occurrences of that symbol in the document are merely replaced by a reference to the entry in the code book. EP-A-0112991 teaches substantially the same idea, but extended further to provide code book entries for whole words as well as characters.

However, these schemes are intended to be provided within a facsimile transmitter (and corresponding receiver) to replace CCITT recommendation T4, rather than being provided at an interface which can communicate with standard facsimile terminals.

According to the present invention, there is provided an image interface circuit as claimed in claim 1.

In one described embodiment, there is provided a facsimile interface unit which receives a conventional facsimile image signal (encoded, for example, according to T4) and compresses it by performing optical character recognition using standard, stored templates. Thus, the image signal is replaced by a stream of character symbols, which occupy very much less bandwidth. Preferably, the bandwidth required is reduced still further by subsequently performing text compression on the stream of symbols. There is also provided a corresponding receiver FIU which receives the character symbols and reconstructs a facsimile image signal for transmission on to the receiving facsimile.

In one preferred embodiment, the apparatus is operable to employ optical character recognition for a plurality of different languages; for example, by trying a first language (e.g English) and then, if unsuccessful, a second langauge (e.g. Japanese), then a third language (e.g. Spanish) and so on until successful recognition is found. In this aspect, advantageously, a spell checker may be provided for each language, the output of the spell checker being used to discriminate between different languages which share a subset of characters (for example between European languages such as English, French and Swedish).

The order in which languages are applied may be determined in accordance with the identity of the called party or the calling party; for example, data on the language to be used by the called or calling party may be stored in a database; either in the (or each) FIU, or accessible from the (or each) FIU.

In another embodiment, an FIU sends not only the characters but data defining the text area in which the characters are located. Thus, some of the general layout of the document is preserved even though only the textual matter is transmitted.

In a preferred embodiment, the FIU provides, in addition to optical character recognition, a compression process for areas of the image which are not recognised by the optical character recognition as consisting of text but which consist of simple graphics (e.g. line graphics).

For example, encoding a line graphic image by means of vectors (e.g. straight line vectors or splines) enables line images (which may be sketches, handwriting or unrecognised languages of text) to be transmitted with a high degree of compression.

In this embodiment, remaining image areas may be encoded as graphics using, for example, the joint picture expert group (JPEG) algorithm for still pictures.

In a yet further embodiment, compression (which may or may not involve optical character recognition) is provided at an FIU, and the FIU is arranged to decompress a facsimile image signal to reconstitute all or part of the original image, and is arranged further to signal back to the originating facsimile to select the highest available transmission resolution. It might seem paradoxical, where the intention is to compress the facsimile signal further so as to reduce the amount of data, to request additional data from the transmission source. However, enhancing the transmission resolution makes it possible to employ sophisticated compression techniques which exploit the redundancy in the original image, with a reduced dependence on the thresholding and quantisation effects introduced by the facsimile scanning.

In a described example, there is provided a facsimile interface unit arranged to perform compression of a signal, in which the amount of compression is selected by the sending or the receiving party, and preferably the latter. Thus, the receiving party (who may be paying for the satellite link) can decide, for example, to receive only the text part of a document compressed to a high degree using optical character recognition according to the above aspects; or may receive text and simple graphics, or may receive a document compressed to a much lower degree (which consequently requires longer transmission time).

The above referenced Dimolitsas paper discusses the possibility of a store and forward facsimile system; that is, a system in which a facsimile message is stored and then later transmitted. Store and forward facsimile is also mentioned in "Real-time transmission of group 3 facsimile over interconnected public switched digital mobile satellite networks", Dimolitsas, Rieser and Feldman, COMSAT Technical Review, 22 (1992) Spring, No. 1, Clarksberg, MD, US. It is not known whether any such system has actually been put into practice.

The above described T30 facsimile protocols were developed for direct point-to-point communications, in which a message is received as it is transmitted, and many users of facsimile apparatus rely upon the indication that a facsimile has been successfully transmitted as an indication that it has been successfully received at its destination. Accordingly, use of a store and forward system may give rise to problems or mistakes, and hence be deemed unreliable.

On the other hand, many mobile satellite communication terminals have directional antennas, which must be aligned with the communication satellite whilst the terminals are in use. Accordingly, such terminals are often not available for communication whilst they are being transported from one site to another.

Thus, in many cases, users of such terminals will be unavailable for communication at times. The same is true of other mobile radio users (for example terrestrial cellphone users) who may be unavailable due to, for example, blockage by tunnels or other physical obstructions. Point-to-point facsimile communication to such users therefore cannot be guaranteed.

Accordingly, in a described example, there is provided a store and forward facsimile service in which a signal is transmitted back to the originating facsimile machine to indicate that the facsimile has been forwarded only as far as a store and forward service, not to its eventual recipient. Advantageously, the return message is a facsimile signal; since this can be received by all facsimile apparatus, no adaptation of existing apparatus is required.

Further, after receiving a facsimile message for transmission, the store and forward system does not terminate the call but instead sends the return facsimile in the same call; it is therefore unnecessary to separately establish the identity of the transmitting facsimile terminal.

In a described example, (which may be used where the first embodiment is not supported by the originating facsimile and is therefore unsuccessful), the dial number of the calling facsimile terminal is extracted from signalling information transmitted by it with the facsimile message.

In another described example (which may be used where the second embodiment is not supported, or where the dial number forwarded is incorrect) the dial number of the sending facsimile apparatus is obtained by the store and forward system from the telecommunications network via which the facsimile message is received, by using the intelligent feature known in the UK as calling line identification (CLI) and in the US as CallerID.

Further, a store and forward facsimile system is described, in which an attempt is first made to contact the called facsimile terminal via the radio (e.g. satellite link) and transmit a point-to-point message to it; and only if this is unsuccessful is the facsimile message stored. This embodiment is operable to reduce the volume of data which the store and forward system needs to store, since many calls may not be stored at all.

Naturally, in each of the above examples and embodiments, the invention extends to reception and decoding apparatus as well as transmission and coding apparatus.

Other preferred embodiments of the invention will be apparent from the following description and drawings.

Embodiments of the invention will now be illustrated, by way of example only, with reference to the accompanying drawings, in which:
Figure 1 is a block diagram showing the elements of a facsimile store and forward system incorporating a first embodiment of the present invention;
Figure 2 is a schematic block diagram showing in greater detail components of a facsimile apparatus, a facsimile interface unit and an earth station according to the embodiment of Figure 1;
Figure 3 is a schematic block diagram showing in greater detail the components of a portion of the facsimile interface unit of Figure 2;
Figure 4 (comprising Figures 4a-4c) is a flow diagram showing the process of operation of the apparatus of Figure 3;
Figure 5 is a block diagram showing a component of a facsimile interface unit according to the embodiment of Figure 2;
Figure 6 (comprising Figures 6a and 6b) is a flow diagram showing schematically the process of operation of the apparatus of Figure 5;
Figure 7 is a block diagram showing in greater detail the elements of an optical character recognition circuit forming part of Figure 3;
Figure 8 is a flow diagram illustrating the operation of the apparatus of Figure 7;
Figure 9 is a block diagram illustrating schematically the components of a graphics coder forming part of the embodiment of Figure 2;
Figure 10a and 10b are illustrative diagrams demonstrating the operation of the graphics coder of Figure 9;
Figure 11 is a diagram illustrating the format of a signal output via a formatter forming part of the embodiment of Figure 3;
Figure 12 is a flow diagram showing schematically the operation of a reception control circuit forming part of the embodiment of Figure 2; and
Figure 13 illustrates a facsimile image comprising text, graphics and image data regions.

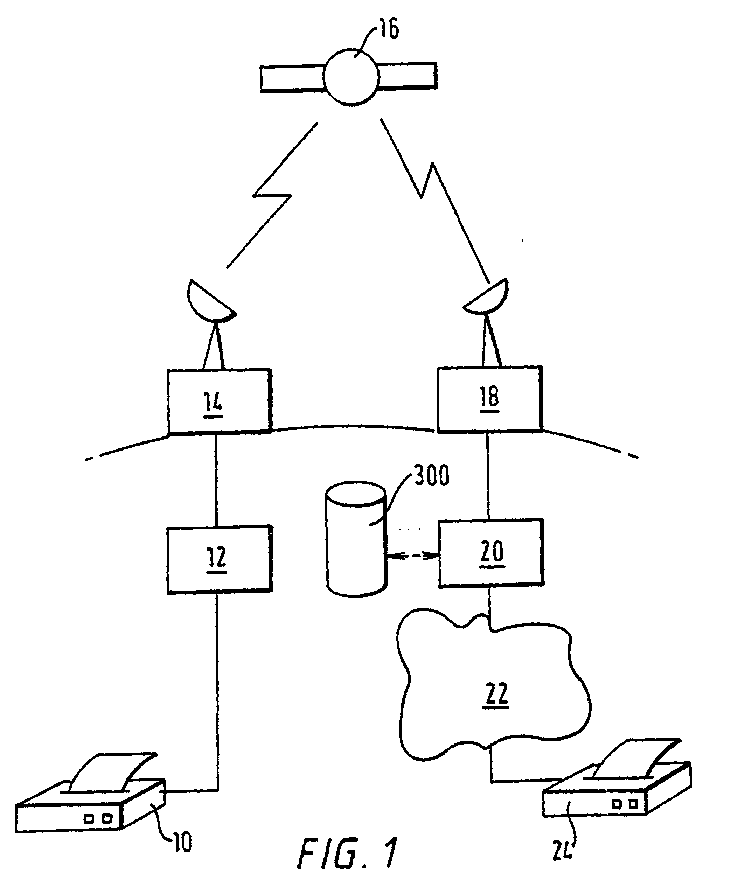

Referring to Figure 1, a mobile facsimile terminal 10 is connected to a mobile earth station 14 by means of a first facsimile interface unit (FIU) 12. A fixed facsimile terminal 24 is connected, via a PSTN 22, to a second facsimile interface unit 20, which in turn is connected to a fixed earth station 18. The fixed earth station 18 is arranged to communicate with the mobile earth station 14 via a satellite 16, which may be placed in geostationary orbit or in a non-geostationary orbit (for example a low earth orbit, an intermediate orbit (e.g. a 6 hour circular orbit), or a high elliptical orbit).

For the purposes of the present invention, the mobile facsimile terminal 10 will be described as the called terminal and the fixed facsimile terminal 24 as the calling terminal, although it will be appreciated that in general each may perform either function.

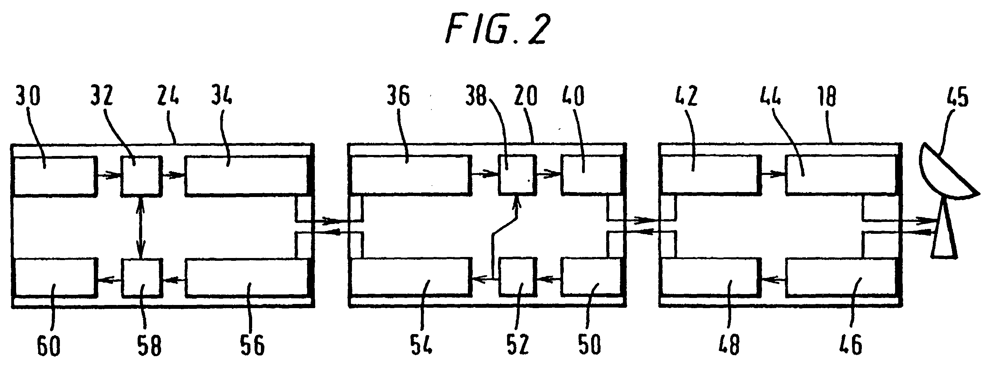

As shown in Figure 2, the calling facsimile terminal 24 comprises an input device 30, such as a scanner for scanning a document or an input port from a personal computer for sending facsimile data, and a facsimile transmission microprocessor 32 which encodes signals from the input device 30 according to a predetermined algorithm. The facsimile transmission microprocessor 32 also controls the operation of facsimile transmission, including call set-up, pre-message procedure, message transmission, post-message procedure and call release. The output of the facsimile transmission microprocessor 32, in the form of digital data, is modulated by a facsimile transmission modulator 34 to produce an analogue output suitable for transmission through a public service telephone network.

The analog output of the facsimile transmission modulator 34 is connected, either directly or through a telephone circuit, to the calling FIU 20, which demodulates the analog output to recover the digital facsimile data. The calling FIU 20 comprises a demodulator 36, which converts the modulated signal to digital data, a transmission control unit 38 which encodes the data and an output buffer 40 from which encoded data is transferred to the fixed earth station 18. In the fixed earth station 18, the data is modulated by a radio frequency (RF) modulator 42 connected to an RF transmitter 44, which transmits the signal to the satellite 16 by means of an antenna 45 directed at the satellite 16. The calling FIU 20 may be integrated with the fixed earth station 18.

Although not germane to the present invention, it is mentioned that the fixed earth station 18 may further comprise an RF receiver 46 for receiving RF signals from the satellite 16, in this case RF signals transmitted by the called facsimile terminal 10. The received signal is demodulated by an RF demodulator 48 to produce a digital signal which is stored in an input buffer 50 in the calling FIU 20. The digital signal is decoded by an FIU receiving control unit 52 and transferred to an FIU receiving modulator 54 which modulates the decoded data to produce an analog output signal suitable for reception by the calling facsimile terminal 24.

The received signal is then demodulated by a facsimile receiving demodulator 56 in the calling facsimile terminal 24 to produce digital data, which is decoded by a facsimile receiving microprocessor 58. The facsimile receiving microprocessor 58 controls an output device 60 such as a printer to print a hard copy of the received facsimile, or an output port to a personal computer for receiving facsimile data.

The facsimile terminal 24 and earth station 18 are known per se, and the above description thereof is merely illustrative.

The structures of the mobile facsimile terminal 10, mobile facsimile interface unit 12 and mobile earth station are equivalent to those described above.

### Compression

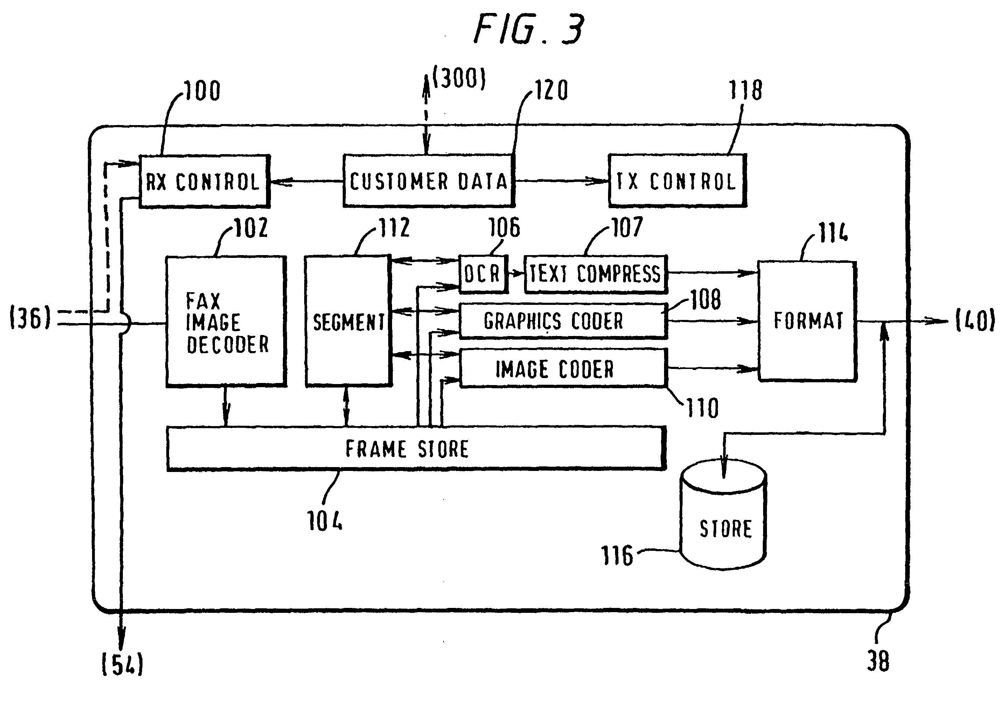

Referring to Figure 3, the structure of the transmission control unit 38 will now be discussed in greater detail.

The transmission control unit 38 in this embodiment comprises a reception signalling control unit 100 which receives T30 control signal from the demodulator 36 and transmits back signals via the modulator 54 to set up the call from the calling facsimile terminal 24. It further comprises a facsimile image decoder 102 arranged to receive facsimile image signals from the demodulator 36, encoded according to the T4 standard, and to write a corresponding black/white image into a frame store 104 dimensioned to contain an entire page of an image encoded at high resolution.

Connected to read the frame store 104, in parallel, are an optical character recognition (OCR) circuit 106 followed by a text compression circuit 107; a graphics coder circuit 108; and an image coder circuit 110. Each may be provided by a suitably programmed microprocessor, microcontroller or digital signal processing (DSP) chip. Alternatively, one or more may be provided by a dedicated chip or chip set, or one or more may be provided by a single suitably programmed microprocessor or microcontroller.

Also connected to the frame store 104; the OCR circuit 106; the graphics coder circuit 108; and the image coder circuit 110 is a segmenter circuit 112 operable to designate segments of the image in the frame store (i.e. address ranges therein) to be operated on by the OCR circuit, the graphics coder and the image coder circuit.

The outputs of the text compression circuit 107, the graphics coder circuit 108 and the image coder circuit 110 are supplied to a formatter device 114 which combines all three into a frame or packet format for supply to the output buffer 40 or a store (e.g. a large hard disk) 116, the destination being selected by a transmission control circuit 118, which is also selectively operable to couple the store 116 to the output buffer 40.

Finally, a customer data signalling circuit 120 is provided, which is operable to access a remote database (for example a central database) storing customer data to be described in greater detail below, and to receive therefrom predetermined customer data for controlling the operation of the receive control circuit 100 or transmit control circuit 118.

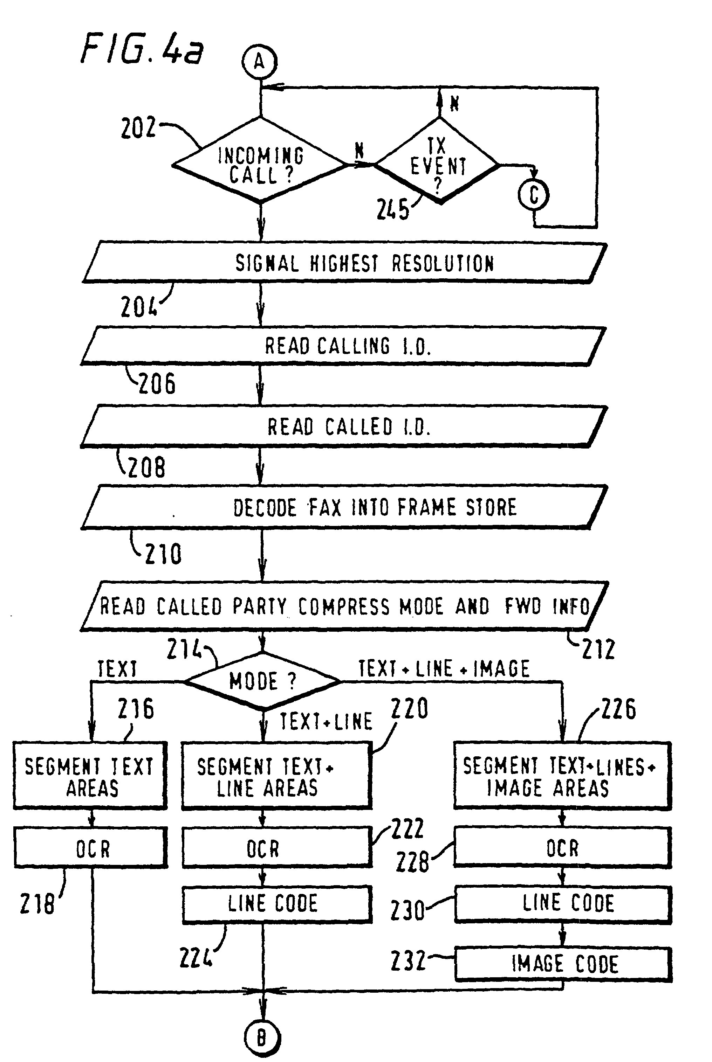

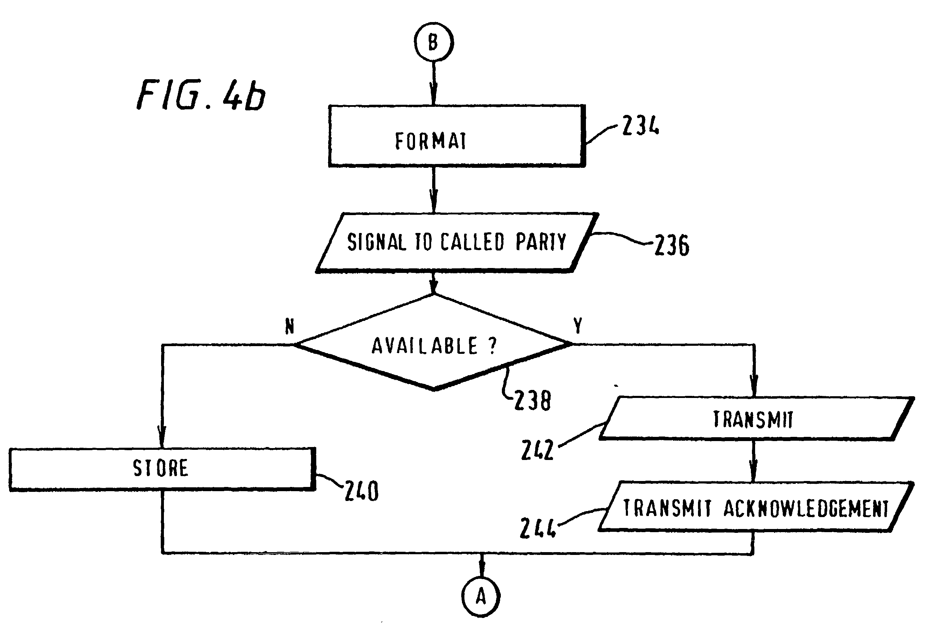

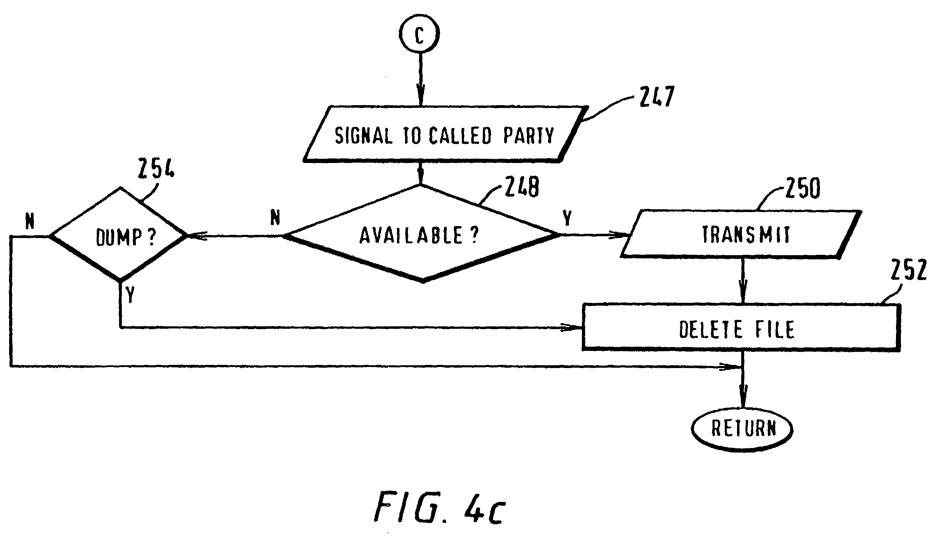

The operation of the apparatus of this embodiment will now be disclosed in greater detail with reference to Figure 4. In step 202, if the receive control circuit 100 detects an imcoming call, during the initial call set-up signalling the receive control circuit 100 signals back to the calling facsimile 24 in a step 204 to request the highest available resolution on the calling facsimile 24. In this embodiment, preferably, details of common facsimile apparatus are stored in the receive control circuit 100 so that if the calling facsimile 24 supports non standard features, any such features which improve the resolution of the incoming facsimile image are accepted.

In steps 206 and 208, the receive control circuit 100 reads the calling and called telephone numbers (or, in general, ID data).

In step 210, the fax image decoder circuit 102 receives the incoming run length encoded facsimile bit stream and constructs a corresponding frame image (1 bit per pixel) in the frame store 104.

In step 212, the customer data signalling circuit 120 transmits the called party ID to a remote database 300 which comprises a record for each mobile terminal 10. In reply the customer data signalling circuit 120 receives a message from the database 300 indicating, firstly, any restriction of the type of compression required by the terminal 10 (specifically, a restriction to text only compression or text and line compression) and any specific instructions for facsimile forwarding which may have been stored for the terminal 10 (specifically, one of the following:
1. forward at time X
2. attempt to forward at intervals of X hours
3. attempt to forward only Y times
4. forward on registration
5. store facsimile permanently).

If (step 214) the compression mode is specified as text only, in step 216 the segmenter 112, in conjunction with the optical character recogniser circuit 106, segments out any text areas of the image and the optical character recogniser 106 extracts a corresponding stream of characters in step 218, which (after compression by the compressor 107) are supplied as corresponding digital data (e.g. ASCII representation for Roman characters) to the formatter 114.

If the mode is set, in step 214, to text and line images only, then in a step 220 the segmenter 112, in conjunction with the OCR circuit 106 and graphics coder 108, segments out any text area and any line areas of the image in the frame store 104. Then, in step 222 (as in step 218) the OCR circuit 106 extracts digital data corresponding to text characters from the text areas, which are then text-compressed. In a step 224, the graphics coder 108 encodes the line graphics areas identified by the segmenter 112 and generates corresponding line output data to the formatter 114.

If the compression mode is unspecified, or is specified as text, line and image compression, in step 226 the segmenter 112 (in conjunction with the OCR circuit 106, graphics coder 108 and image coder 110) segments the image into text areas, line areas and image areas. In step 228 (as in steps 218 or 222) the OCR circuit 106 and text compression circuit 107 generate a stream of compressed digital data representing text characters encoding the text areas; in step 230 (as in step 224) the graphic coder 108 generates a stream of graphics codes to represent the graphic areas; and in a step 232, the image coder generates a stream of digital image data representing the image areas of the facsimile. All three streams of data are supplied to the formatter 114.

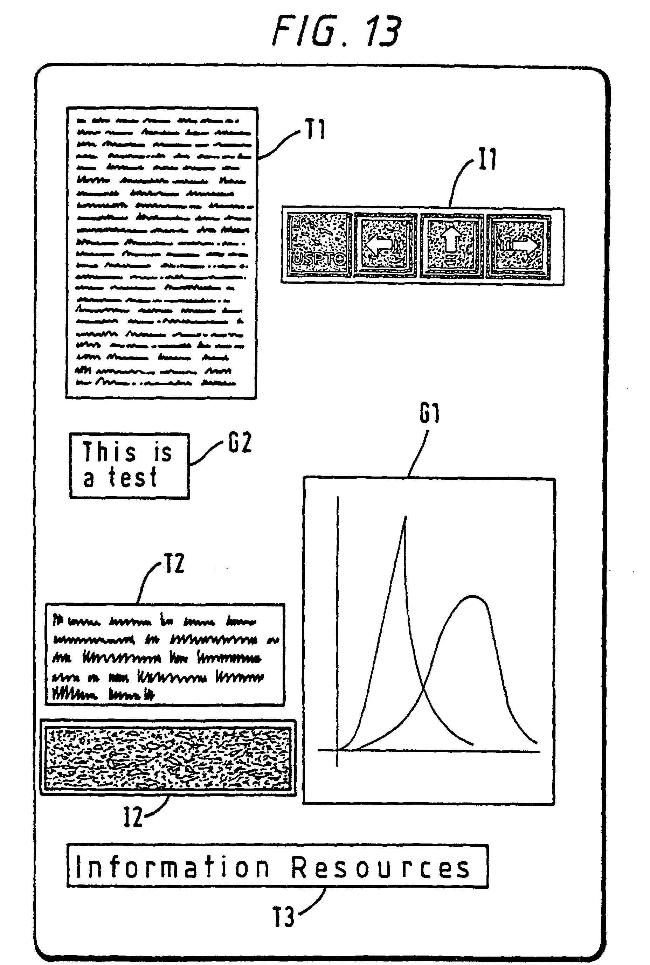

Figure 13 illustrates a facsimile image, comprising text regions T1, T2 and T3, comprising English text of different sizes; simple graphics regions G1 (a graph) and G2 (handwritten text); and image regions I1 and I2.

Referring to Figure 4b, the one, two or three streams of data are formatted in step 234 by the formatter circuit 114. The transmit control circuit 118 signals, in a step 236, to the called terminal 10 via the satellite 16, mobile earth station 14, and mobile FIU 12. In the event that the connection is unsuccessful (step 238), the formatted compressed image signal stream from the formatter 114 is supplied to the store 116 in a step 240, together with the called terminal forwarding information determined in step 212.

Then, a signal is transmitted back to the calling terminal in step 246 indicating that the message has been stored, as disclosed in greater detail below.

If a connection is possible (step 238), the compressed image data from the formatter 118 is forwarded to the output buffer 40, and then transmitted via the fixed earth station 18, satellite 16, and mobile earth station 14, to the mobile FIU 12 (step 242). When confirmation of receipt is received from the mobile FIU 12, an acknowledgment is transmitted back to the calling terminal 24 (step 244).

Referring to Figure 4a, when no incoming call is detected in step 202, in step 245 the transmit controller circuit 118 reads the store 116 to determine whether the forwarding information stored for any stored message indicates that an attempt should now be made to transmit that message. For example, it may be noted that four hours have elapsed since the last recorded attempt to transmit the message; or the time may now be approximately equal to the time for transmission which has been requested by the called terminal 10.

In the event that one of these conditions is met, a transmission event occurs and control passes to the subroutine of Figure 4c. In step 247 (as in step 236), the transmit control circuit 118 signals to the called terminal 10, and in step 248, the transmission control circuit 118 determines (as in step 238) whether the called terminal 10 is available and, if so, in step 250 (as in step 242) the message is transmitted and, upon acknowledgment of successful transmission from the mobile FIU 12, the stored message is deleted from the store 116 in a step 252.

If it is not possible to connect to the called terminal 10 in step 248, the transmission control circuit 118 determines whether or not the stored message should be deleted (step 254) in accordance with the forwarding information determined in step 212, either because a predetermined time has elapsed since the stored message was initially received or because a predetermined number of unsuccessful attempts to forward the message have been made. If the file is determined to be deleted, step 252 is performed; if not, or after deletion in step 252, control returns to step 202 of Figure 4a.

### Decompression

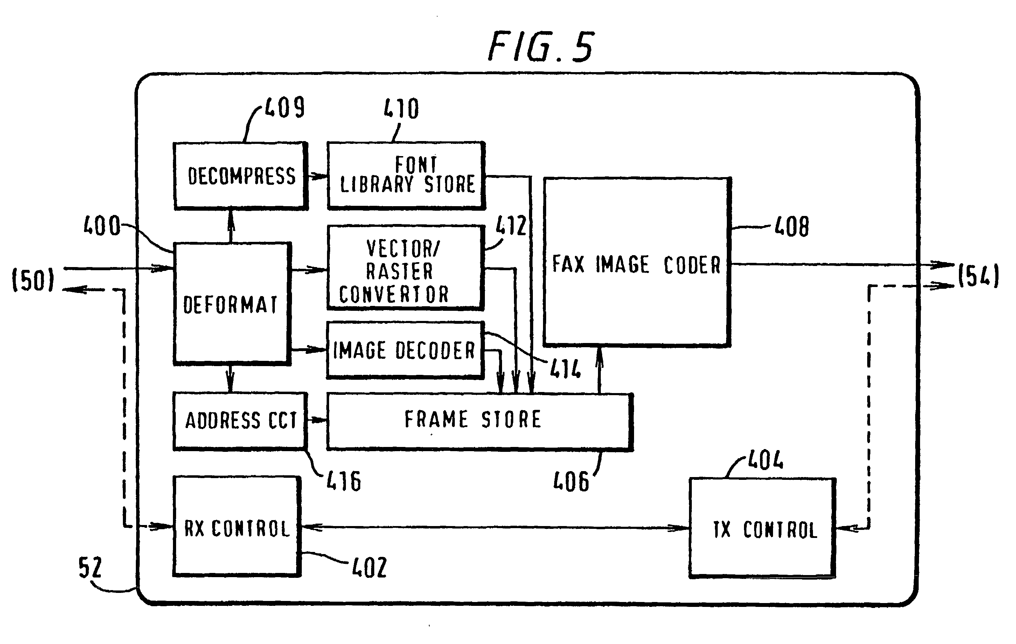

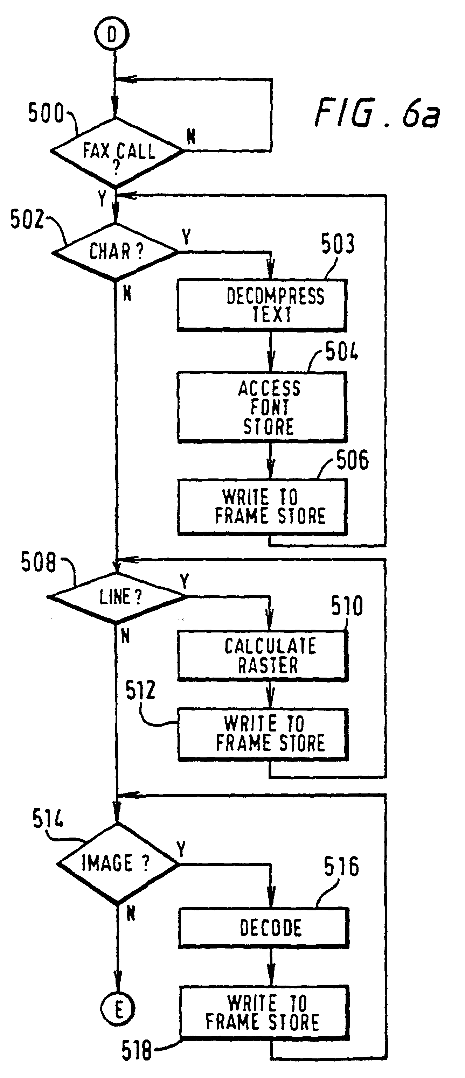

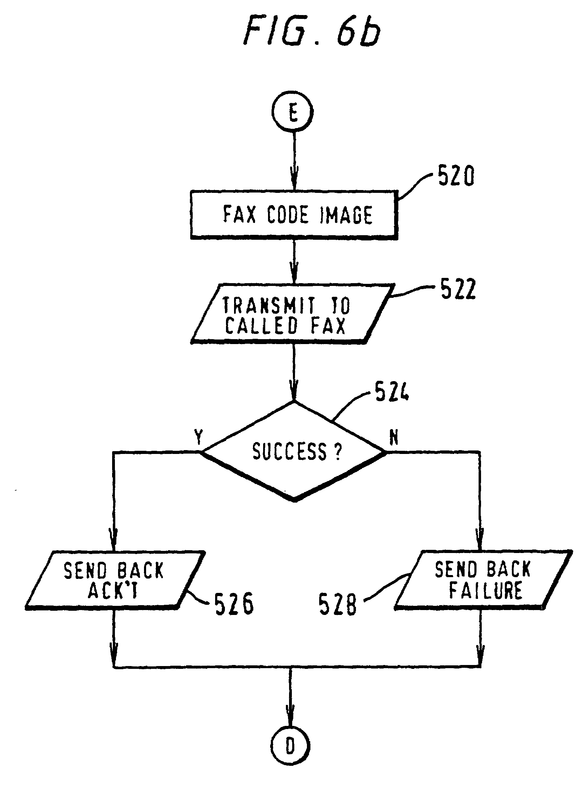

Referring to Figures 5 and 6, the corresponding decompression process will now be described.

Figure 5 indicates the components of the receive control circuit 52 of the mobile FIU 12 (the same components may also be present in the fixed FIU 20). The receive controller comprises a deformatting circuit 400, operable to reverse the formatting of the formatter circuit 114; a reception control circuit 402 for negotiating the call set up via the satellite 16 with the fixed FIU 20; a transmit control circuit 404 for negotiating the call set up with the mobile facsimile terminal 10; a frame store 406 for storing a binary (thresholded) black/white image of a received page of facsimile; and a facsimile coder circuit 408 for encoding the frame image held in the frame store 406 according to the T4 transmission protocol, connected to supply the fax image to the output buffer 54.

Also provided are a text decompression circuit 409; a font library store 410 storing, for each of a set of text characters (for example the ASCII character set) a bit map font corresponding to an image of the character; a vector to raster converter circuit 412 for receiving the data (e.g. end points, length and angle or spline control points) of a line represented as a vector and constructing an equivalent raster image; and an image decoder circuit 414 operable to perform the inverse decoding process to that applied by the image encoder 410. The font library store, vector/raster converter 412 and image decoder 414 are each arranged to write image data to the frame store 406 under control of an address circuit 416.

Referring to Figure 6, the operation of the apparatus of Figures 2 and 5 will now be described in greater detail.

In step 500, when an incoming facsimile call is detected via the satellite 16 and earth station 14, the deformatter circuit 400 supplies the compressed text to the decompressor 409, which outputs the text character codes making up the or each text area to the input ports of the font library store, which functions essentially as a look up table, to output the corresponding character image to the area of the frame store 406 determined by the address circuit 416, in steps 504 and 506. When all character data has thus been written to the frame store 406, in step 508, line data present is passed to the vector to raster converter circuit 412, which calculates, for each line segment, a corresponding raster image and writes the raster image to the frame store 406 in steps 510 and 512.

After all such line segments have been reconstructed in the frame store, each block of image data is passed from the deformatter 400 in step 514, to the image decoder circuit 414, where it is decoded in step 516 and written to the frame store 406 in step 518.

After all character, line and image data have been reconstructed in the frame store 406, referring to Figure 6b, the fax image coder 408 encodes the image in the frame store 406 in step 520, and in step 522 it is transmitted to the called facsimile device 10 under control of the transmission control circuit 404.

The transmission control circuit 404 determines whether the transmission has been successful and, in the event of success, transmits back (via the receive control circuit 402) a success acknowledgment message in step 526 via the satellite 16 and earth stations 14, 18 to the fixed FIU 20.

In the event that the transmission is unsuccessful (for example because the called facsimile device 10 is not functioning or has run out of paper) a failure message is sent in step 528, via the mobile earth station 14, satellite 16 and fixed earth station 18 to the fixed FIU 20. Thereafter, the step 500 is repeated.

### DETAILS OF COMPRESSION

### OCR Circuit 106 (Fig. 3)

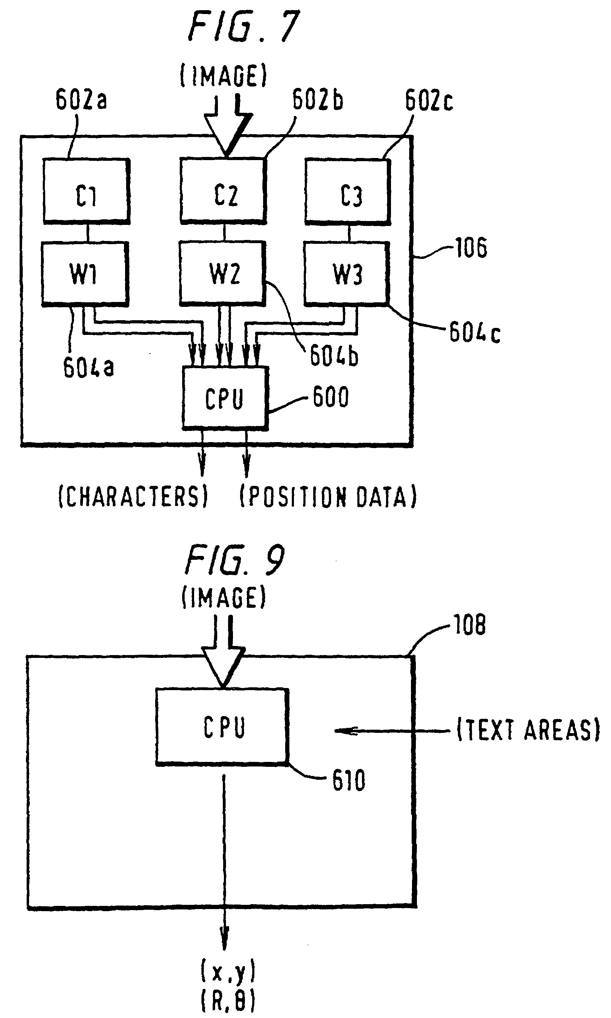

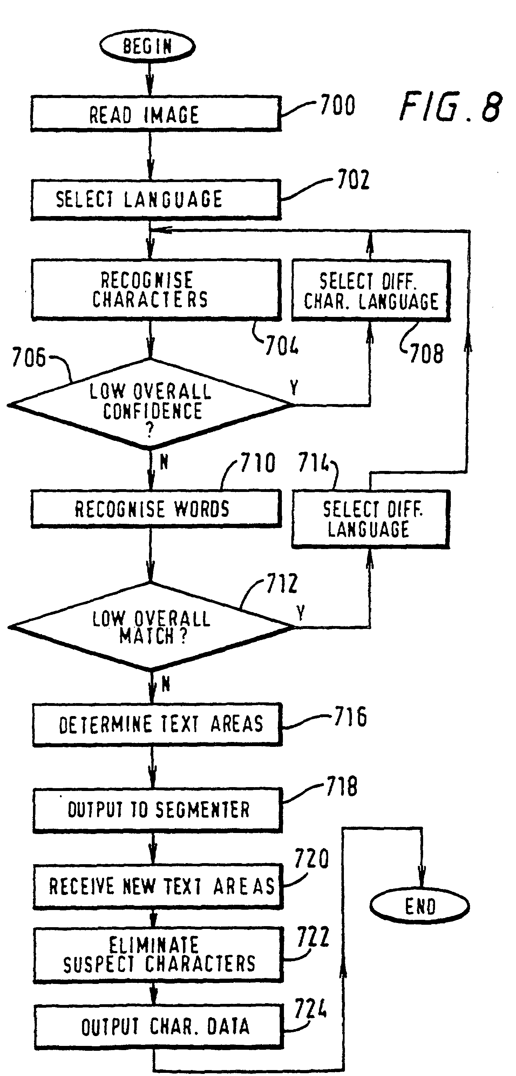

Referring to Figures 7 and 8, the OCR circuit 106 comprises a central processor 600; a number of character memories 602a-602c; and a number of word memories 604a-604c. Each of the character memories 602 stores bitmap template representations of the characters of a particular language in one or more fonts; for example, 602a may contain the Roman character set used in English; 602b may contain the Japanese Kanji, Katakana end/or Hiragana character sets and 602c may contain image representations of the Chinese character set.

Each of the word stores 604 contains a dictionary of commonly occurring words in a language; each word store is therefore associated with one of the character stores 602 by use of the same language.

In general terms, the central processor unit 600 is operable to read (step 700) the entire image held in the frame store 104, and to compare portions of the image with the characters held in the character store 602a (step 704). The CPU 600 may be a conventional microprocessor operating in accordance with a stored program. For example, for recognition of the English language, the stored program may be the Wordscan plus (TM) program supplied by Calera Recognition Systems Inc. 475 Potrero Avenue, Sunnyvale, CA 94086, USA, which includes files of data providing the contents of the character store 602a and word store 604a (which are provided by areas of a single RAM or disc memory device).

For positions of the image where a character is recognised, the CPU 600 generates the following data:
1. a code (e.g. an ASCII code for Latin characters) indicating the identity of the character;
2. a confidence factor indicating the degree of similarity between the area of the image and the stored representation or template of the character in the character store 602;
3. an X, Y position within the image of the character;
4. (preferably) an indication of the size (i.e. pitch) of the character;
5. (optionally) an indication of the font of the character.

Where the average level of confidence in character recognition is low, this may indicate that the language is not one to which the character templates stored in the template store 602a correspond. In this case (step 706) the CPU 600 selects a different character store 602b (step 708) which utilises a different set of characters (for example, the Japanese alphabet).

Once a relatively high level of confidence has been found, from the above data, the CPU 600 is arranged, by utilising the character pitch and position data, to determine the association of characters in lines defining words, lines and paragraphs (step 710). The CPU 600 is then operable to compare each group of characters recognised as a word with the words stored in the word store 604a, and to count the number of misrecognised words as a percentage of the total number of words.

If (step 712) the proportion of misrecognised words is high, it is likely that the wrong language is being used, although the character set is largely correct. For instance, the word store may be applying English words to a text which is in Swedish. If this is the case, in step 714 a new character set store 602b is selected, which overlaps substantially with the first character set (e.g. Swedish or French is selected rather than English), and step 704 is repeated.

On the other hand, if there is a high percentage of recognised words, the language is assumed to be correct. The CPU 600 then determines the boundaries of the rectangular boxes surrounding each text area; specifically, the boundaries surrounding each paragraph of text and preferably additionally each line of text. These are then supplied to the segmenter 112 as an initial estimate of the boundaries of the text areas.

However, it is possible that the optical character recognition circuit 106 will recognise graphic characters as text; for example, a horizontal straight line may be recognised as a series of underlined spaces, or a vertical straight line may be recognised as a vertical sequence of "I"s.

Accordingly, the text areas boundaries determined in step 716 are reviewed by the segmenter, as described in greater detail below, which supplies revised text boundaries to the CPU 600 in step 720. The CPU 600 then determines whether any previously recognised characters now lie wholly or partially outside the new text boundaries, and if so discards those characters in step 722. Then, in step 724, the CPU 600 supplies character data to the formatter 114, comprising the sequence of character codes; the co-ordinates of paragraph rectangles encompassing the characters; and, preferably, pitch and spacing information for each character.

In this embodiment, the CPU 600 also signals the recognised language to the customer data signalling circuit 120, from which the recognised language is signalled to the database station 300.

### Text Compression Circuit 107 (Fig. 3)

The text compressor 107 comprises, in this embodiment, a central processing unit (e.g. 610) applying a text compression algorithm such as the well known Lempel-Ziv or LZW algorithm (e.g. using the PKZIP program available freely) to reduce the redundancy in areas of text, and output a series of symbols representing the text in compressed form.

### Graphics Coder 108 (Fig. 3)

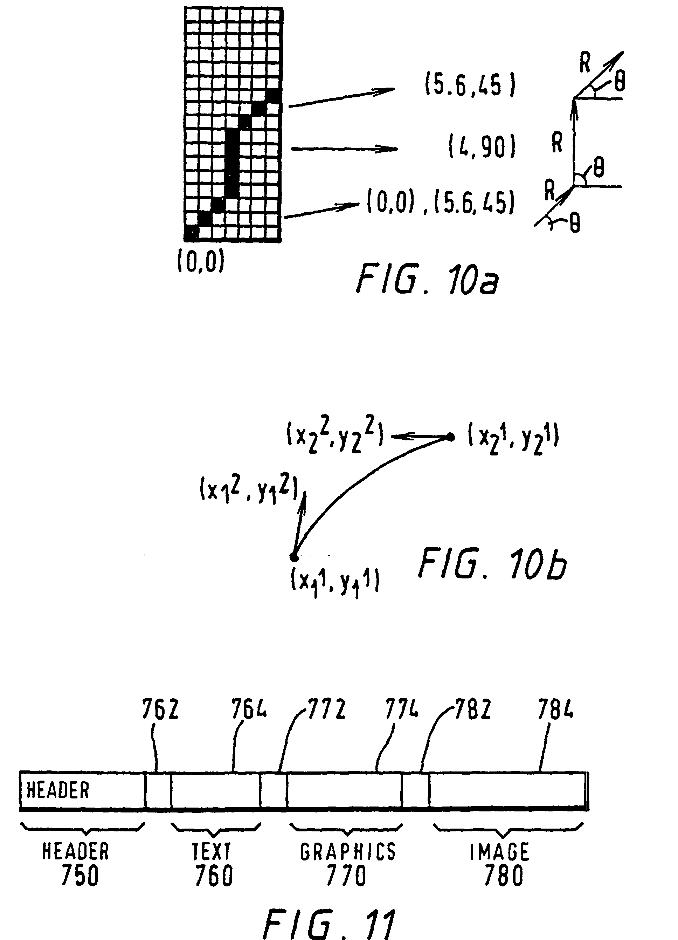

Referring to Figure 9, the graphics encoder 108 comprises a central processing unit 610 such as a suitably programmed microprocessor or microcontroller. Referring in Figure 10a, in one embodiment the CPU 610 is arranged to receive a raster image of a portion of the contents of the frame store 104, and to approximate lines in the image by a sequence of straight vectors defined by a vector length and a vector angle (or, alternatively, by vertical and horizonal offset distances) Thus, the sigma shape shown in Figure 10a is replaced by three vectors. Further details of a suitable processing algorithm are to be found in "A fast parallel algorithm for thinning digital patterns" T.Y. Zhang and C.Y. Suen, Communications of the ACM, Volume 27, No. 3, March 1984, pages 236-239.

In a further embodiment., the graphics coder 108 is arranged instead to fit a spline curve, such as a Bezier curve, defined by knots consisting of pairs of control points X¹, Y¹; X², Y², as shown in figure 10b. Details are to be found in, for example, "An introduction to splines for use in computer graphics and geometric modelling", Bartels, Beatty and Barsky, published by Morgan Kaufman, ISBN 0-934613-27-3.

### Image Coder 110 (Fig. 3)

The image coder 110, comprises, in this embodiment, a transform encoder applying a two dimensional spacial transform such as the discrete cosine transform (DCT) or Hadamard or Walsh transforms. Conveniently, in this embodiment, the image coder comprises a digital signal processor device arranged to execute the joint picture expert group (JPEG) compression algorithm, in which blocks of the image contained in the frame store 104 are subjected to a discrete cosine transform, and the transform coefficients are then quantised and run length encoding is performed to encode the runs between non zero transform coefficients; circuits for performing the JPEG algorithm are widely commercially available.

### Segmenter 112 (Fig. 3)

The segmenter 112 performs the task of allocating areas of the image in the frame store 104 to be coded by the optical character recognition circuit 106, the graphics coder 108 and the image coder 110. The segmenter therefore comprises a suitably programmed microprocessor device, operable to segment the image into text, simple (line) graphics and complex graphics areas with the following criteria in mind, in order of importance:
1. the text areas should include all recognisable text;
2 the text areas should not include simple graphics, such as the lines making up boxes and tables with which text is associated;
3. the text, simple graphics and complex graphics ares should be partitioned so as, to the greatest extent possible, the areas are separated by boundaries of white space.

The optical character recognition circuit 106 will correctly recognise text, but may (as discussed above) also misrecognise graphics or images as text.

The graphics encoder 108 will encode text as simple graphics (although at a lower compression efficiency than the OCR circuit 106), but will not efficiently encode complex images.

The image encoder 110 will encode text and simple graphics, but with lower compression efficiencies than the optical character recognition circuit 106 or the graphics coder 108.

Thus, in general, the segmenter 112 permits the coding circuits to attempt to encode areas of the image in order of their coding efficiency (i.e. the OCR coder first, the graphics coder second and the image coder third in this embodiment).

To segment between simple graphics areas to be encoded by the graphics coder 108 (e.g. graphs) and complex graphics areas to be encoded by the image coder 110 (e.g. photographs), a simple test based on the image density may be employed; areas of the image which consist largely of white background with relatively few black pixels are relatively likely to be efficiently encoded by the graphics coder 108, whereas areas with black pixel content of, say, 30% or higher are likely to be more efficiently encoded by the image coder 110.

The segmenter 112 may perform this test simply by examining the run length codes received prior to decoding by the fax image decoder 102, or may do so on the basis of an examination of the image stored in the frame store 104 (for example by creating vertical and horizontal density histograms), or may do so by permitting the image coder 110 to encode the entire image in the frame store 104 and examining the transform coefficients for each block of the image to determine whether the lower order transform coefficients (corresponding broadly to the overall image density) have relatively high values.

In determining the boundaries between text areas and simple (i.e. line) graphics areas, the segmenter 112 adopts, in the first instance, the text area boundaries supplied by the OCR circuit 106. The segmenter 112 then performs the following additional tests:
1. The confidence factors for character and word recognition at positions just inside and just outside the text boundaries are reviewed, relative to the average confidential factor across the text boundary. If low character confidence factors are found just within one boundary, the segmenter 112 determines whether, by moving the boundary in by one character pitch, the word confidence factors at that boundary are improved, and if so, the boundaries move in.
   If a large number of words are not recognised at one boundary, the segmenter 112 moves the boundary outward by one character width, to accept further characters which had previously been rejected because of low recognition confidence. If this leads to an increase in the number of recognised words at the boundary, the segmenter 112 retains the increased boundary.
2. In order to prevent the mis-recognition of a vertical line (for example forming the wall of a box or table enclosing text) as characters, the segmenter 112 reviews the character codes produced by the OCR circuit 106, and detects any occurrence of "I", "l" or "1" characters disposed vertically or approximately vertically above each other in the image ("vertically" here refers to the orientation of the text detected by the OCR circuit 106, rather than to the dimensions of the image itself).
   In the event of detection of such a sequence of characters, the segmenter 112 instructs the graphics coder 108 to encode at least the corresponding area of the image (and, conveniently, the whole image) as graphics. The segmenter 112 determines, from the output of the graphics coder 108, whether the graphics coder has encoded a continuous line or series of connected lines at the same position as the OCR circuit has recognised a vertical sequence of characters and, in the event that the graphics coder output indicates a continuous vertical line, the segmenter 112 instructs the OCR circuit 106 to break the text area into two subsidiary text areas, one at either side of the recognised vertical sequence of characters, and to delete the vertical sequence of characters themselves, which are then designated as part of a graphics area lying between the two text areas, to be encoded by the graphics coder 108.
3. A possible confusion can arise between long underlinings in a text area, and horizontal lines close to the text area. Therefore, the segmenter 112 reviews the characters produced by the OCR circuit 106 to detect:
   (a) lengthy sequences of underline characters which are underlining a blank space; and
   (b) lower case characters which cross an underline (e.g. y, p, g, q).

The former category are likely to denote a graphics line to be encoded by the graphics coder 108, whereas the latter are likely to indicate that the line is probably an underline, which should not be encoded by the graphics coder 108. Accordingly, if the segmenter notes underlined lower case, line crossing characters, then any horizontal lines at the same vertical position in the image ("vertical" again referring to the co-ordinate axes of the text determined by the OCR circuit 106) are treated as underlines and processed by the OCR circuit as part of the text area. On the other hand, where the segmenter circuit 112 notes lengthy underlines in free space, without other characters crossing the line or being detected as in the same vertical position as the line, the segmenter circuit 112 assumes that the line is to be encoded as an image (for example because it is a horizontal demarcation line of a table) and instructs the OCR circuit 106 to split the text area into two around the underline characters. The underline characters are then deleted from the text stream and the area between the two text areas is treated as a graphics area and encoded by the graphics encoder 108.

Thus, in sum, the segmenter 112 applies specific rules to deal with potentially or partially overlapping areas of the simple graphics and text, so as (insofar as possible) to ensure that tables and boxes are treated as graphics with text areas within.

Where the mode is determined to be text only, the segmenter 112 may omit these text/graphic discrimination operations, and may merely determine the size of the text areas by examining the confidence factors and word areas around the boundaries of the text areas determined by the OCR circuit 106 as described above.

### Formatter 114 (Fig. 3)

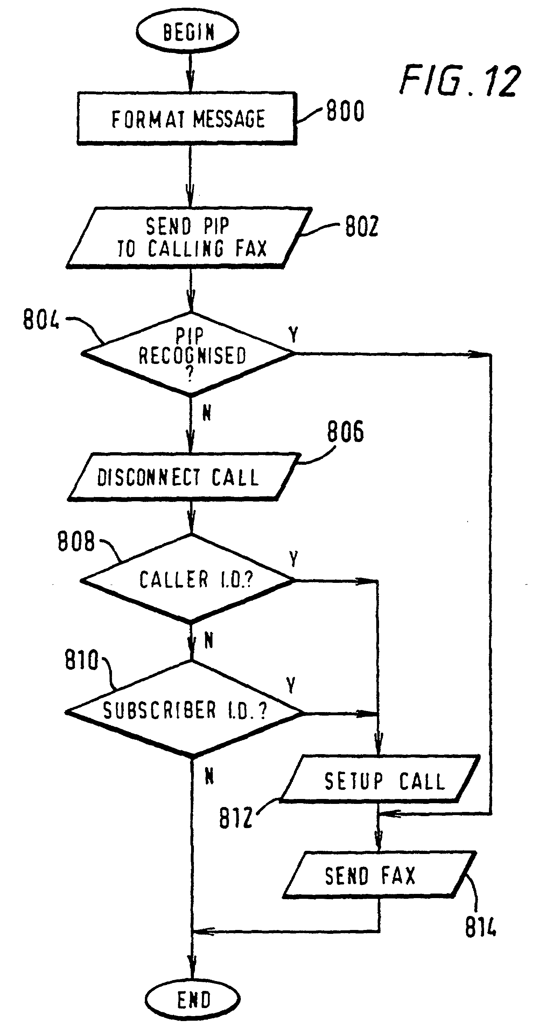

The formatter 114 is operable to receive the text, graphics and image data from the OCR circuit 106 and text compressor 107; graphics coder 108 and image coder 110, and to generate a serial data stream as shown in Figure 11, comprising a header portion 750 (consisting of conventional facsimile signalling data, identifying the message as being a compressed facsimile message, and identifying the type of compression used (i.e. text only; text and graphics; or text, graphics and image).

Also provided is a text portion 760 (or, more normally, one text portion 760 for each of several areas of text identified in the document) comprising a text header portion identifying the co-ordinates of the text area, and a character portion 764 comprising the sequence of characters occupying the text area.

In text and graphics, or text, graphics and image modes, a graphics portion 770 is also present, comprising co-ordinate data portion 772 defining the co-ordinates of the graphics area, and vector graphics data 774 providing cartesian or polar co-ordinates for recreating line vectors as described above. Finally, one or more image data fields 780 are present in text, graphics and image compression mode, comprising image area co-ordinates 782 and image data 784 consisting, in this embodiment, of run length coded sets of transform co-ordinates.

Preferably, the header portion 750 in this embodiment specifies the number of text, graphics and image areas in the remainder of the message. The message is produced by the formatter 114 as a single message in this embodiment, but it could occupy a frame, cell or packet format in other applications.

### Customer Data Signalling Circuit 120 (Fig. 3)

The customer data signalling circuit comprises a signalling link circuit (for example using signalling system 7 (SS7)) connected via a signalling link to the database 300, which sends data request messages, and receives messages specifying one or more the following:
1. preferred language(s)
2. preferred compression mode
3. forwarding time(s)
4. forwarding interval(s)
5. message erasure time.

### Transmission control circuit 118 (Fig. 3)

The transmission controller 118 comprises a suitably programmed microprocessor, which is operable to perform the process of steps 236-252 (Figs 4b & 4c).

### Receiver controller 100 (Fig. 3)

The receiver controller 100 may be a suitably programmed microcontroller. In addition to performing the usual facsimile signalling functions necessary to set up a call (available on a variety of commercially sold chip products), the receiver control circuit 100 is arranged also to transmit back the message to the calling facsimile machine in step 246 when the compressed facsimile image has been stored. The message comprises a stored facsimile message, into which are inserted facsimile image data corresponding to the following:
1. the date and time of reception of the facsimile message at the FIU
2. the called party number
3. the compression mode, and
4. Any status information that is available on the called party.

For example, when received, such a message might read as follows:

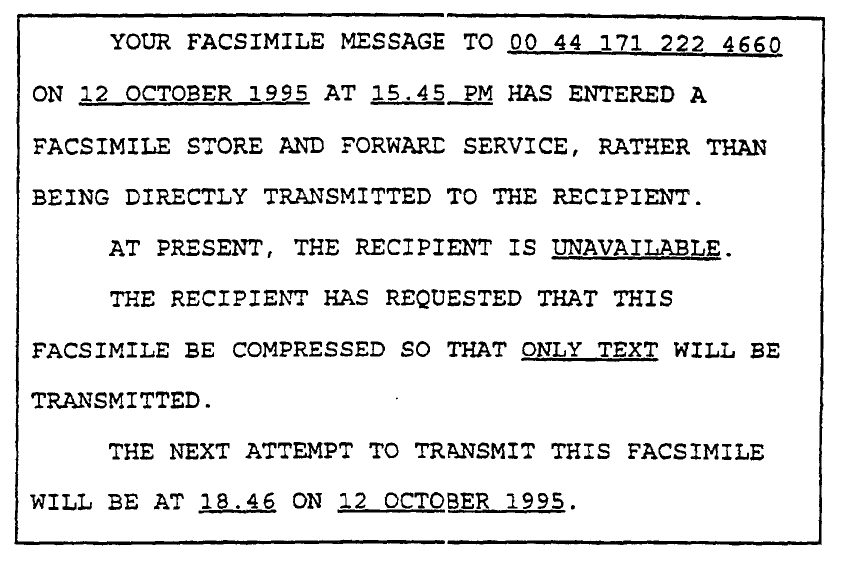

Figure 12 shows the process of operation of the receiver controller 100.

In step 800, this message is generated and prepared for transmission.

In step 802, rather than disconnecting the line after the end of the fax message has been received from the calling terminal 24, in the post message procedures specified in CCITT standard T30, the receive control circuit 100 sends back a procedural interrupt positive (PIP) signal to the facsimile machine 24, which causes the facsimile machine 24 to re-enter the pre-message procedure of CCITT standard T30 (step 802).

In step 804, the receive control circuit 100 determines whether the calling facsimile apparatus 24 has re-entered the pre-message procedure; this is necessarily the case since some few facsimile machines do not fully comply with specification T30.

In the event that the facsimile apparatus 24 does not re-enter the pre-message procedure, in step 806 the receive control circuit 100 terminates the call, and determines whether, in step 206, a caller ID signal was received from the network. A caller ID signal will be available in most of North America and Western Europe, and comprises a 300 bit/s frequency shift keyed (FSK) signal between the first and second rings during the initial ringing cycle (step 808).

Where no caller ID was received on call set up, the receive controller 100 determines whether during the call set up procedure the calling facsimile apparatus 24 supplied a transmitting subscriber identification (TSI) field. This field is optionally according to recommendation T30, but where it is filled it contains the telephone number of the calling party (although this telephone number is not necessarily up to date or correct).

On the first positive outcome of step 808 or 810, in step 812 the receive controller 100 sets up a new call (step 812) to the calling facsimile apparatus 24, and in step 814 transmits the reply facsimile. Likewise, if in step 804 the calling facsimile apparatus 24 successfully re-initiates the call set up procedure, without the previous call being disconnected, the receive controller 100 sends the reply facsimile in step 814.

Thus, in this embodiment to sum up, the receive control first attempts to transmits a reply message to the calling facsimile without terminating the call from the calling facsimile; and if this is unsuccessful, it firstly attempts to make use of caller ID information on the called number supplied by the telecommunications network 22 (which, where available, is reliable) and, failing this, makes use of the calling telephone number recorded in the TSI field (which is not always present and may not always be reliable).

Thus, the transmitting facsimile 24 is alerted to the fact that the fax message has not been forwarded directly to the destination facsimile 10.

### DETAILS OF DECOMPRESSION

The operation of the decompressor circuit in detail will be obvious from the foregoing. In particular, the co-ordinate data received in the field 762, 772, 782 is used by the address circuit 416 to allocate the correct addresses in the frame store 406.

The character data received in the text portion 764 is decompressed and supplied to the font library store 410, the character representations of which are then written to the correct addresses in the frame store 406 addressed by the address circuit 416.

The text decompressor 409 operates the inverse of the compression algorithm (for example, it may comprise a programmed CPU operating the PKUNZIP decompression program, which is widely available).

The vector/raster converter circuit 412 comprises a programmed microprocessor which receives the co-ordinate data in field 774 and creates a raster image by setting pixels on the line defined by the co-ordinate data, and resetting all other pixels.

The image decoder 414 comprises, firstly, a transform decoder operating the reverse algorithm to the transform coder circuit (e.g. the JPEG decoder algorithm) to reconstitute transform co-efficients, and then perform the inverse transform to recreate an array of pixel values.

Secondly, since these pixel values are in general not binary valued but multi bit, the image decoder 414 is then arranged to perform a thresholding process on each pixel value to generate a one or zero value, which is used to set the corresponding pixel in the frame store 406 selected by the address circuit 416.

The thresholding process may simply set the value of each pixel depending on whether it is above or below a predetermined threshold, but preferably a more sophisticated thresholding process is used such as dither processing or error diffusion processing (details of which are well known in the printer art and need not be discussed here further), in which different pixels have different thresholds, and the thresholds vary either randomly, or in dependence upon the values of surrounding pixels.

### Other embodiments or modifications

In the above embodiment, the OCR circuit 106 applies languages in a predetermined order; generally, English first, and then if certain characters are recognised, other languages sharing a sub set of the English alphabet (in a predetermined order); and if not, other languages with dissimilar character sets in a predetermined order (for example, Japanese and then Chinese).

However, in a further embodiment, the customer database 300 may contain a field indicating an order of languages specified by the customer, in particular the customer associated with the called party facsimile so that if a particular customer communicates principally or exclusively in Japanese, then Japanese is the first language to be attempted. This order of preference for languages is then communicated to the FIU 20 via the customer data signalling circuit 120.

The entry in the database 300 may be created either directly (on a request from the user of the facsimile apparatus 10 or an electric signal therefrom) or may be kept updated on the basis of use. In the later case, the customer data signalling circuit 120 signals, for each received facsimile call, the language which the OCR circuit 106 has determined to be the main language of the received facsimile, and the customer database station 300 maintains a running ranging of the languages thus received from facsimile interface units 20 in order of their frequency.

In a modification of this embodiment, the customer database station 300 may even contain information supplied by the customer in the form of a particular supplemental dictionary of words commonly used by the customer, all characters or symbols commonly used by the customer or person attempting to communicate with him. These may then be downloaded via the customer signalling circuit 120 to the FIU 20 on reception of a facsimile destined for the customer in question. The same naturally applies to any customers associated with calling facsimile terminals 24 who register the order of preference of languages they themselves transmit in.

In the above described embodiments, the data compression is performed at a facsimile interface unit which is separate from an earth station. However, it will be apparent that the facsimile interface unit could be integrated into the earth station 18. Alternatively, any data compression could be performed centrally, separately of the facsimile interface units 20, 12 which would in this case merely forward a received facsimile call to the central store and forwarding station which would encode the call and attempt to call the mobile facsimile terminal 10.

Although separate components have been described in the above embodiment, it will be apparent that many of the processing functions could be combined into a smaller number of processors or even a single suitably programmed digital processor performing all the functions of the apparatus of Figures 2, 3 and/or 5.

Although vector compression has been described for graphics processing in the above described embodiment, it will be apparent that other methods will be used; for example, the graphics coder 108 could perform the process of modification of the width of the probably density function of the facsimile signal which is described in "Facsimile compression for transmission over 800 bit/s to 2400 bit/s digital mobile channels", Dimolitsas and Corcoran, 1990 MILCOM '90, IEEE, pages 0502-0505, (23.2.1.-23.2.4) or in "Compression of facsimile graphics for transmission over digital mobile satellite circuits" by the same authors, in MILCOM '91, 1991 IEEE, pages 0644-0647 (30.1.1-30.1.4).

Although in the above described embodiments an attempt is made to transmit to the called terminal at periodic points in time, in a further embodiment, a network control centre (not shown) monitors any attempt by the remote terminal 10 to initiate a communication, and on detection of such an attempt, sets up a call to the remote terminal 10 to transmit a message indicating that stored facsimile messages are awaiting transmission. The network control centre may then, either on receipt of a signal from the remote terminal or automatically, set up a connection to the remote terminal to forward the stored facsimile message (s) thereto.

Many other modifications or embodiments will be apparent to the skilled reader. The present invention encompasses any and all such modifications substitutions and alternatives.

Reference is made to co-pending International applications WO-A-97/19619 and WO-A-97/19620.

## Claims

1. An image interface circuit (20) for compressing an image for subsequent transmission via a radio transmission channel, comprising:
an image reception port;
an image reception circuit (36) for receiving an image from said image reception port in a first image compression format;
an image decompression circuit (102, 104) for decompressing said image;
an image segmenting circuit (112) for segmenting the image into text and non-text areas;
an optical character recogniser (106) for recognising text characters in the text areas and generating corresponding character data;
an image encoder circuit (108, 110) for compression-encoding the non-text areas into image data in a second image compression format different from said first image compression format;
a compressed image transmission port connected to said radio transmission channel, and
a signal combiner circuit (114) for combining the character data and the image data into a combined signal and supplying the combined signal to the compressed image transmission port.

2. A circuit as claimed in claim 1, in which the image segmenting circuit (112) is arranged to segment said non-text areas into line graphic areas and complex image areas, and the image encoder circuit comprises;
a graphics compressor circuit (108) for compressing the line graphic areas into a third image compression format; and
an image compressor circuit (110) for compressing the complex image areas into said second image compression format.

3. A circuit as claimed in claim 1, in which the image decompression circuit (107, 104) includes an image frame store (104) for storing an entire image page.

4. A circuit as claimed in any preceding claim in which the first image compression format is a facsimile compression format.

5. A circuit according to any preceding claim in which the radio transmission channel is a satellite channel.

6. A circuit as claimed in any preceding claim, wherein the image segmenting circuit is arranged to segment the image into text areas defined by coordinate data defining rectangular blocks embedded within, and occupying less than the width of, said image.

7. A circuit according to any preceding claim, wherein the optical character recogniser (106) is arranged to selectively recognise a first set of characters of a first language at a first time and a second set of characters of a second language at a second, subsequent, time, if characters of said first language are not recognised.

8. A circuit according to claim 7, in which the first language is English.

9. A circuit according to claim 7, further comprising means (100) arranged to decode the called ID with which the image is associated.

10. A circuit according to claim 9, further comprising a signalling circuit (120) for signalling said called ID to a remote database (300) and for receiving destination user data therefrom.

11. A circuit according to claim 9, in which the order of application of the languages depends upon the destination ID.

12. A circuit according to claim 9, further comprising a word recogniser coupled to the output of said optical character recogniser to recognise words of said first language.

13. A circuit according to claim 12, in which said first and second languages have a common subset of characters, and in which said second language is selected when said word recogniser fails to recognise words as being of said first language.

14. A circuit according to any preceding claim, including a signalling circuit arranged to transmit a rate request signal to instruct the image source (24) to select the highest available resolution.

15. A circuit according to any preceding claim, including a text compressor for compressing the text characters to provide a compressed text stream.

16. An image decompression interface circuit arranged to receive a compressed image compressed by a circuit according to any preceding claim, to separate the text and non-text data, to convert the character data to image data, to decompress the non-text data from said second image compression format, to combine the converted characters and decompressed non-text data into an image.

## Patentansprüche

1. Bild-Interfaceschaltung (20) zur Kompression eines Bildes für die nachfolgende Übertragung über einen Funkübertragungskanal, aufweisend:
einen Bildempfangsanschluss,
eine Bildempfangsschaltung (36) zur Entgegennahme eines Bildes von dem Bildempfangsanschluss in einem ersten Bildkompressionsformat,
eine Bilddekompressionsschaltung (102, 104) zur Dekompression des Bildes,
eine Bildsegmentierungsschaltung (112) zur Segmentierung des Bildes in Text- und nicht-Text-Bereiche,
einen optischen Zeichenerkenner (106) zum Erkennen von Textzeichen in den Textbereichen und zum Erzeugen entsprechender Zeichendaten,
eine Bildcodierschaltung (108, 110) zur Kompressionscodierung der nicht-Text-Bereiche in Bilddaten in einem von dem ersten Bildkompressionsformat verschiedenen zweiten Bildkompressionsformat,
einen Kompressionsbild-Übertragungsanschluß, der mit dem Funkübertragungskanal verbunden ist, und
eine Signalkombinierungsschaltung (114) zur Kombination der Zeichendaten und der Bilddaten zu einem kombinierten Signal und zum Liefern des kombinierten Signals an den Kompressionsbild-Übertragungsanschluß.

2. Schaltung nach Anspruch 1, wobei die Bildsegmentierungsschaltung (112) eingerichtet ist, die nicht-Text-Bereiche in Liniengrafik-Bereiche und komplexe Bildbereiche zu segmentieren und die Bildcodierschaltung aufweist:
eine Grafikkompressionsschaltung (108) zur Kompression der Linien-Grafik-Bereiche in ein drittes Bildkompressionsformat, und
eine Bildkompressionsschaltung (110) zur Kompression der komplexen Bildbereiche in das zweite Bildkompressionsformat.

3. Schaltung nach Anspruch 1, wobei die Bilddekompressionsschaltung (107, 104) einen Bildrahmenspeicher (104) zur Speicherung einer gesamten Bildseite beinhaltet.

4. Schaltung nach einem der vorhergehenden Ansprüche, wobei das erste Bildkompressionsformat ein Facsimile-Kompressionsformat ist.

5. Schaltung nach einem der vorhergehenden Ansprüche, wobei der Funkübertragungskanal ein Satellitenkanal ist.

6. Schaltung nach einem der vorhergehenden Ansprüche, wobei die Bildsegmentierungsschaltung eingerichtet ist, das Bild in Textbereiche zu segmentieren, die von Koordinatendaten festgelegt sind, die rechteckige Blöcke festlegen, die in dem Bild eingebettet sind und weniger als die Breite des Bildes beanspruchen.

7. Schaltung nach einem der vorhergehenden Ansprüche, wobei der optische Zeichenerkenner (106) eingerichtet ist, wahlweise zu einer ersten Zeit einen ersten Zeichensatz einer ersten Sprache zu erkennen und zu einer folgenden zweiten Zeit einen zweiten Zeichensatz einer zweiten Sprache zu erkennen, wenn keine Zeichen der ersten Sprache erkannt werden.

8. Schaltung nach Anspruch 7, wobei die erste Sprache Englisch ist.

9. Schaltung nach Anspruch 7, mit einer Einrichtung (100) zur Decodierung der angerufenen Identität, die dem Bild zugeordnet ist.

10. Schaltung nach Anspruch 9, mit einer Signalisierungsschaltung (120), um einer entfernten Datenbank (300) die angerufene Identität zu signalisieren und Ziel-Benutzerdaten von ihr zu empfangen.

11. Schaltung nach Anspruch 9, wobei die Reihenfolge der Anwendung der Sprachen von der Ziel-Identität abhängt.

12. Schaltung nach Anspruch 9, mit einem mit der Ausgabe des optischen Zeichenerkenners verbundenen Worterkenner zur Erkennung von Wörtern der ersten Sprache.

13. Schaltung nach Anspruch 12, wobei die erste und die zweite Sprache einen gemeinsamen Teilsatz an Zeichen aufweisen und die zweite Sprache gewählt wird, wenn der Worterkenner nicht erkennen kann, daß Worte der ersten Sprache entstammen.

14. Schaltung nach einem der vorhergehenden Ansprüche mit einer Signalisierungsschaltung zur Übermittlung eines Geschwindigkeitsanforderungssignals, um die Bildquelle (24) anzuweisen, die größtmögliche Auflösung zu wählen.

15. Schaltung nach einem der vorhergehenden Ansprüche mit einem Textkompressor zur Kompression der Textzeichen, um einen komprimierten Textstrom zu liefern.

16. Bilddekompressions-Interfaceschaltung zum Empfang eines von einer Schaltung der vorhergehenden Ansprüche komprimierten Bildes, zur Trennung der Text- und der nicht-Text-Daten, zur Umwandlung der Zeichendaten in Bilddaten, zur Dekompression der nicht-Text-Daten aus dem zweiten Bildkompressionsformat, zur Kombination der umgewandelten Zeichen und der dekomprimierten nicht-Text-Daten zu einem Bild und zur Kompression des Bildes in das erste Bildkompressionsformat.

## Revendications

1. Circuit d'interface d'image (20) pour la compression d'une image pour sa transmission consécutive par l'intermédiaire d'un canal de transmission radio, comprenant :
un port de réception d'image ;
un circuit de réception d'image (36) pour recevoir une image provenant dudit port de réception d'image selon un premier format de compression d'image ;
un circuit de décompression d'image (102, 104) pour décompresser ladite image ;
un circuit de segmentation d'image (112) pour segmenter l'image en zones de texte et en zones non-textuelles ;
un dispositif optique de reconnaissance de caractères (106) pour reconnaître des caractères textuels dans les zones de texte et générer des données de caractères correspondantes ;
un circuit de codage d'image (108, 110) pour le codage par compression des zones non-textuelles en données d'image selon un deuxième format de compression d'image différent dudit premier format de compression d'image ;
un port de transmission d'images compressées connecté audit canal de transmission radio et,
un circuit de combinaison de signaux (114) pour combiner les données de caractères et les données d'image en un signal combiné et fournir le signal combiné au port de transmission d'images compressées.

2. Circuit selon la revendication 1, dans lequel le circuit de segmentation d'image (112) est adapté pour segmenter les zones non-textuelles en zones graphiques linéaires et en zones d'image complexes, le circuit de codage d'image comprenant :
un circuit de compression graphique (108) pour compresser les zones graphiques linéaires selon un troisième format de compression d'image ; et
un circuit de compression d'image (110) pour compresser les zones d'image complexes selon ledit deuxième format de compression d'image.

3. Circuit selon la revendication 1, dans lequel le circuit de décompression d'image (107, 104) comporte un dispositif de stockage de trame d'image (104) pour le stockage d'une page d'image entière.

4. Circuit selon l'une quelconque des revendications précédentes, dans lequel le premier format de compression d'image est un format de compression de facsimilé.

5. Circuit selon l'une quelconque des revendications précédentes, dans lequel le canal de transmission radio est un canal de transmission par satellite.

6. Circuit l'une quelconque des revendications précédentes, dans lequel le circuit de segmentation d'image est adapté pour segmenter l'image en zones de texte définies par des données de coordonnée définissant des blocs rectangulaires placés dans ladite image et occupant moins de la largeur de cette image.

7. Circuit selon l'une quelconque des revendications précédentes, dans lequel le dispositif optique de reconnaissance de caractères (106) est adapté pour reconnaître sélectivement un premier ensemble de caractères dans une première langue à un premier instant et un deuxième ensemble de caractères dans une deuxième langue à un deuxième instant consécutif, si les caractères de ladite première langue ne sont pas reconnus.

8. Circuit selon la revendication 7, dans lequel ladite première langue est de l'anglais.

9. Circuit selon la revendication 7, comportant en outre des moyens (100) adaptés pour décoder l'identifiant appelé associé à l'image.

10. Circuit selon la revendication 9, comportant en outre un circuit de signalisation (120) pour signaler ledit identifiant appelé à une base de données distante (300) et pour recevoir des données d'utilisateur destinataire provenant de cette base.

11. Circuit selon la revendication 9, dans lequel l'ordre de demande des langues dépend de l'identifiant de destination.

12. Circuit selon la revendication 9, comportant en outre un dispositif de reconnaissance de mots couplé à la sortie dudit dispositif optique de reconnaissance de caractères pour reconnaître des mots de ladite première langue.

13. Circuit selon la revendication 12, dans lequel lesdites première et deuxième langues ont un sous-ensemble de caractères commun, et dans lequel ladite deuxième langue est sélectionnée lorsque ledit dispositif de reconnaissance de mots ne reconnaît pas des mots en tant que mots de ladite première langue.

14. Circuit selon l'une quelconque des revendications précédentes, comportant un circuit de signalisation adapté pour transmettre un signal de demande de cadence pour provoquer une sélection de la plus haute résolution disponible par la source d'image (24).

15. Circuit selon l'une quelconque des revendications précédentes, comportant un compresseur de texte pour compresser les caractères de texte pour fournir un flux de texte compressé.

16. Circuit d'interface de décompression d'image adapté pour recevoir une image compressée par un circuit selon l'une quelconque des revendications précédentes, pour séparer des données de texte et des données non-textuelles, pour convertir les données de caractère en données d'image, pour décompresser les données non-textuelles selon ledit deuxième format de compression d'image, pour combiner les caractères convertis et les données non-textuelles décompressées en une image, et pour compresser ladite image selon ledit premier format de compression d'image.
